Europäisches Patentamt

European Patent Office

Office européen des brevets

(11) Publication number: 0 429 143 A1

## EUROPEAN PATENT APPLICATION

(21) Application number: 90203081.6

(22) Date of filing: 21.11.90

(51) Int. Cl.5: G01N 1/24, G01N 1/28

(30) Priority: 21.11.89 NL 8902871

(43) Date of publication of application:
29.05.91 Bulletin 91/22

(84) Designated Contracting States:
AT BE CH DE DK ES FR GB GR IT LI LU NL SE

(71) Applicant: PROJECT RESEARCH AMSTERDAM B.V.
Oudezijds Achterburgwal 14
NL-1012 DM Amsterdam(NL)

(72) Inventor: van Harreveld, Anton Philip
Oudezijds Achterburgwal 14
NL-1012 DM Amsterdam(NL)
Inventor: Teunissen van Manen, Hendrik Mathijs Otto
Oudezijds Voorburgwal 200
NL-1012 GH Amsterdam(NL)

(74) Representative: Metman, Karel Johannes et al
Octrooibureau Los en Stigter B.V. P.O.Box 20052
NL-1000 HB Amsterdam(NL)

(54) Method and apparatus for taking gaseous samples from gas conduits.

(57) In a method of taking gaseous samples from a gas conduit (1) through which an essentially gaseous flow is conducted, sample gas is withdrawn from the gas conduit (1) into a probe (2) inserted into the gas conduit. Diluting gas is supplied to the sample gas in the probe through a supply line (4), whereafter the sample gas together with the diluting gas is withdrawn from the probe (2). The delivery of the diluting gas supplied to the probe is measured and/or controlled in the supply line (4) and the delivery of the sample gas together with the diluting gas withdrawn from the probe is measured and/or controlled in a location within a discharge line (6). On the basis of these deliveries the delivery of the sample gas is calculated. The sample gas diluted by the diluting gas is collected for analysis between the probe and the measure and/or control location in the discharge line (6). The invention also includes an apparatus for performing this method.

fig.3

# METHOD AND APPARATUS FOR TAKING GASEOUS SAMPLES FROM GAS CONDUITS

The present invention relates to a method and apparatus for taking essentially gaseous samples from a gas conduit through which an essentially gaseous flow is conducted, wherein sample gas is withdrawn from the gas conduit be means of a probe connected to the gas conduit and is diluted by a diluting gas.

The withdrawal of samples from gas flows, such as industrial exhaust gasses, is performed in many occassions to determine the contained concentrations of gaseous contaminations or particles. By analysing the concentration of contaminations in a sample it is possible, when the total delivery flow and a possible dilution factor of the sample are known, to calculate an emission through a gas flow. This is a usual procedure for example in environmental management, which becomes more and more important in society.

In sampling it can be desirable to dilute the withdrawn sample gas, for instance to prevent the sample gas to condensate or to make the sample gas suited for an analysis device having a limited measuring range.

Mixing sample gas and diluting gas may take place both in the probe and outside the sampled conduit. In the latter case it is mostly necessary to heat the lines.

The main difficulties which may be encountered involve condensation, calibration, sorption phenomena and adjustment problems.

Condensation of substances from the sample gas flow often takes place in those parts of the sampling apparatus which are outside the sampled gas conduit, if the dilution is carried out outside this gas conduit. Such parts should then be heated in order to avoid this condensation, which appears to be difficult in practice, not only concerning execution and manageability but also for control of the heat amount.

Calibration of systems in which the dilution takes place within the probe may cause problems since the conditions during calibration often differ substantially from the conditions in the gas conduit to be sampled. These conditions may be extreme, for instance concerning temperature and pressure.

Sorption phenomenon may disturb sampling because adsorption or desorption of components to the fixed parts of the apparatus lead to an underestimation or overestimation of the concentration of these components in the sample. These effects, also called memory-effects, especially play a role if components in low concentrations are studied. This is for example a big problem in investigations to smell concentrations, wherein the smell is often caused by mixtures in which traces of substances in extremely low concentrations are responsible for the smell. Sorption often occurs with measuring or control means placed within the sample flow and having a large specific contact area as well as in long lines.

A disadvantage of conventional apparatus is further that these are not directly suited for static or batch sampling, in which the sampling flow is conducted into a container having a finite volume, such as a sampling bag. In discontinuous use starting effects often play a disturbing roll in said apparatus, which prevent the determination of the eventual dilution factor.

In the conventional apparatus also problems often occur in the adjustment of parameters determining the operation as a consequence of the complexity of these adjustments and the difficult circumstances under which operators should realize these adjustments during sampling.

It is the object of the present invention to provide an improved method and apparatus in order to prevent or remove the disadvantages mentioned above.

For this purpose the invention proposes a method of taking essentially gaseous samples from a gas conduit through which an essentially gaseous flow is conducted, wherein sample gas is withdrawn from the gas conduit into a probe inserted into the gas conduit, while diluting gas is supplied to the sample gas in the probe through a supply line, whereafter the sample gas together with the diluting gas is withdrawn from the probe, the delivery of the diluting gas supplied to the probe being measured and/or controlled in the supply line and the delivery of the sample gas together with the diluting gas withdrawn from the probe being measured and/or controlled in a location within a discharge line and on the basis of these deliveries the delivery of the sample gas being calculated, and the sample gas diluted by the diluting gas is collected for analysis between the probe and the measure and/or control location in the discharge line.

Further, the invention proposes an apparatus for taking essentially gaseous samples from a gas conduit through which an essentially gaseous flow is conducted, by using the method described above, comprising a probe inserted into the gas conduit for withdrawing sample gas from the gas conduit; a supply line connected to the probe and adapted to supply a known diluting gas to the probe; measuring and/or control means in said supply line for measuring and/or controlling the delivery of the diluting gas supplied to the probe; a discharge line connected to the probe and adapted to withdraw the sample gas and the diluting gas from the probe; measuring and/or control means in the discharge line for measuring and/or controlling the delivery of the sampling gas and diluting gas withdrawn from the probe; calculating means connected to the measuring and control means for calculating the delivery of the sample gas withdrawn from the probe on the basis of said deliveries; collecting means for collecting the diluted sample gas for analysis, which collecting means is connected to the discharge line between the probe and the measuring and/or control means.

According to the invention it is possible to accurately collect the sample gas together with any contained contaminations or the like for analysis without disturbances. Then, in the first place condensation of the sample gas is prevented because the dilution already takes place within the probe, preferably within the circumscription of the gas conduit, with which the dew point of the sample gas flow can be lowered to such an extent that also when samples are taken from warm humid exhaust gas flows, even without heating facilities, condensation does not occur when the sample gas is withdrawn from the gas conduit. Further, according to the invention adsorption and desorption are counter-acted to a maximum because the measuring and/or control means are displaced outside the sample flow from the probe to the collecting means so that it is also possible to quantitively sample components in extremely low concentrations. Since the measuring and/or control means are provided outside the gas conduit it is enabled to produce an adjustable dilution of the sample gas in a very well reproducible manner, without essential influence of disturbing parameters encountered in the practice of sampling, such as high temperatures, deviating or varying pressure etc., so that calibration can take place outside the scope of the sampling operation.

In case it is desired to sample the gas conduit continuously, the collecting means is preferably a through-flow analysis device for directly analysing the sample.

On the other hand the apparatus according to the invention can be adapted to provide for static or batch sampling, wherein the collecting means is preferably a sampling container such as an expandable and compressible sample bag, positioned within a vessel communicating with the part of the discharge line incorporating the measuring and control means, a memory of the calculating means including a mathematical model containing the dynamic behaviour of the sampling apparatus.

In this manner it is possible, also with batch sampling in which the limited volume of the sampling container causes the development of start and stop phenomena at the beginning and end of the suction period, to realize an accurate determination of the dilution factor of the sample, or the amount of collected sample gas respectively, because, by means of the mathematical model, these start and stop phenomena can be discounted in accordance with measured or calculated knowledge on the dynamic behaviour of the sampling apparatus.

According to a special embodiment of the apparatus according to the invention the discharge line is divided into a plurality of discharge line branches each comprising a collecting means and a measuring and/or control means.

In this manner it is possible to take different samples simultaneously, wherein for each sample the volume or the delivery of the respective sample gas can be determined accurately.

It is also possible to provide the discharge line or one of the discharge line branches with a shunt.

As a result thereof it is enabled to effect with simple means an accurate distribution of the flow of sample gas and diluting gas over the separate branches in the discharge line.

Further it is possible that the measuring and/or control means of one of the discharge line branches is a controlled suction means adjusted such that a delivery can be sucked which is negligible small with respect to the delivery through the other discharge line branch or branches.

According to the invention it is enabled to make the probe very simple without having restrictions, so that contamination of the probe, or even clogging, is reduced. As a result of the simple construction the probe can be constructed such that the exchange and cleaning thereof can be performed easily and even when the probe is exchanged there are no measuring and/or control means involved. In a possible embodiment the probe may consist of a piece of tubing having an open end positioned within the gas conduit, for example. Herein it is preferred that the supply line for the diluting gas extends at least partially axially within the tubing piece in the direction to the open end thereof and opens into the probe at a distance from this open end, but within the circumscription of the gas conduit, the discharge line being connected to the probe near the opposite closed end.

In this manner the diluting gas is supplied to the probe within the circumscription of the gas conduit, and also a proper mixing of the sample gas with the diluting gas may take place within the probe.

The invention will hereafter be elucidated with reference to the drawing showing a number of embodiments of the invention by way of example.

Fig. 1 is a schematic diagram of a first embodiment of the apparatus for taking samples from a gas conduit, which is suited for continuous sampling.

Fig. 2 is a schematic diagram of a further embodiment of the apparatus for taking samples from a gas conduit, which is suited for batch sampling.

Fig. 3 is a schematic diagram of yet another embodiment of the apparatus for taking samples from a gas conduit, which is suited for taking different samples simultaneously.

In the several figures like reference numerals are used for like parts.

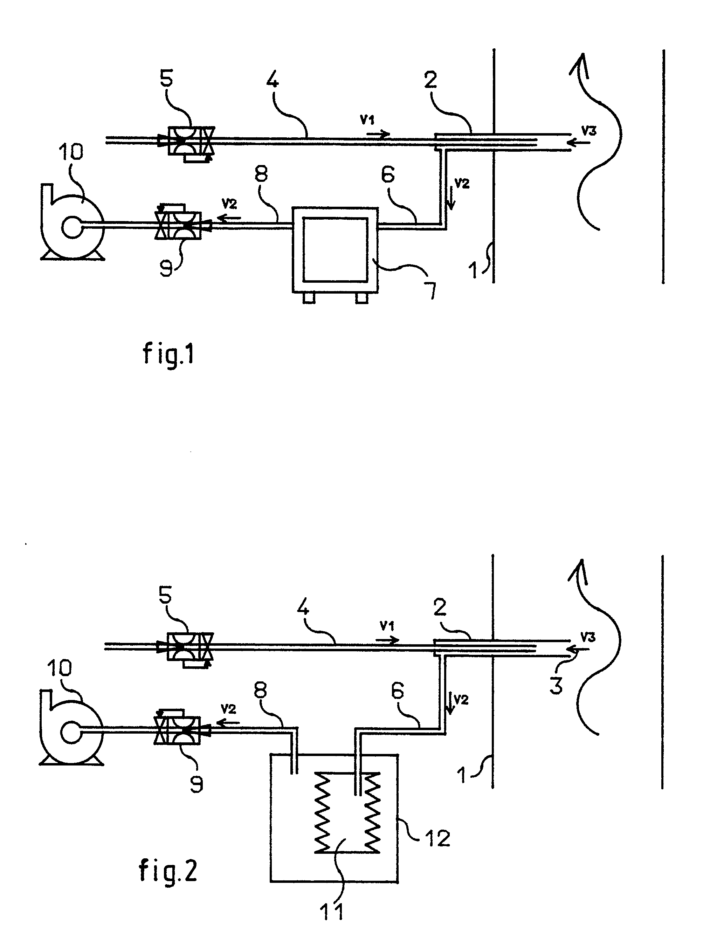

Fig. 1 shows a first embodiment of an apparatus for continuously sampling a gas conduit 1, through which a gaseous flow possibly containing contaminations is conducted, of which the emission should be determined.

The apparatus includes a probe 2 constructed as a straight tubing closed on one end and having an opposite open end 3 passed through the wall of the gas conduit 1 to be sampled and projecting a distance into the interior thereof. A tube-shaped supply line 4 supplies a flow $V_1$ of clean dry medium controlled by a mass flow regulator 5 and serving as diluting gas. The supply line 4 passes through the closed end of the probe 2 and extends internally up to about 2/3 of the axial length of the probe and opens into the probe 2 in a location within the circumscription of the gas conduit 1. A tube-shaped discharge line 6 connects to the probe 2 near the closed end thereof and extends up to an analysis device 7 adapted to continuously analyse the diluted sample supplied by the discharge line 6. To the analysis device 7 connects a further discharge line 8 such that the flow $V_2$ of sample gas and the diluting gas from the probe 2 may flow from the discharge line 6 to the discharge line 8 through the analysis device 7. Within the discharge line 8 is received a mass flow regulator 9, and to the end of the discharge line a vacuum pump 11 is connected effecting the withdrawal of sample gas and diluting gas from the probe.

The operation of the apparatus of fig. 1 is as follows.

From a source not shown a flow of diluting gas having a delivery $V_1$ and being accurately controlled by the mass flow regulator 5 is supplied to the probe 2 through the supply line 4. Simultaneously a flow of sample gas and diluting gas having a delivery $V_2$ is withdrawn from the probe 2 by the vacuum pump 10 and is conducted through the discharge line 6 to the analysis device 7 and then to the mass flow regulator 9. This mass flow regulator 9 accurately controls the delivery $V_2$ and is adjusted such that the delivery $V_2$ of the gas flow withdrawn from the probe 2 is greater than the delivery $V_1$ of the flow of diluting gas from the supply line 4, so that the flow of diluting gas in the probe 2 should be supplemented with a quantity of sample gas withdrawn from the gas conduit 1 through the probe 2. The delivery of the flow of sample gas withdrawn from the gas conduit 1, $V_3$, is equal to the difference of the deliveries $V_2$ and $V_1$. As the deliveries $V_1$ and $V_2$ are known in an accurate manner through the mass flow regulators 5 and 9 it is possible to calculate the delivery $V_3$, for instance by means of a computer (not shown) connected to the mass flow regulators 5 and 9. With this information it is also possible to calculate the dilution factor of the sample, which is defined by:

$$\text{dilution factor} = \frac{V_2}{V_3} = \frac{V_2}{(V_2 - V_1)}$$

With this dilution factor the values for the diluted sample measured by the analysis device 7 are converted to values of the undiluted sample with which the emission values of the gaseous flow through the gas conduit 1 are known.

Fig. 2 shows a modified embodiment of the apparatus of fig. 1 which is adapted for batch sampling. For this purpose the discharge line 6 communicates with a sampling bag 11 positioned within a vessel 12 in accordance with the so called "bag-in-bottle" principle. To the vessel 12 connects the discharge line 8 incorporating the mass flow regulator 9 and the vacuum pump 10.

The operation of this apparatus is essentially similar to that of fig. 1 wherein, however, the vacuum pump 10 does not directly withdraw sample gas and diluting gas from the probe 2, but sucks gas from the vessel 12 with a delivery of $V_2$, thereby expanding the bag and withdrawing sample gas and diluting gas with equal delivery $V_2$ from the probe 2 through the discharge line 6 until the sample bag 11 is filled sufficiently. Due to the limited volume of the sampling bag 11 the sampling operation in this manner causes the development of start and stop phenomena at the beginning and end of the suction period of the vacuum pump 10. These phenomena are discounted in accordance with measured or calculated knowledge of the dynamic behaviour of the sampling apparatus by means of a mathematical model, for example stored in a computer which also has the values of the deliveries $V_1$ and $V_2$ during the suction period as input. In this manner the delivery $V_3$ of the flow of sample gas from the gas conduit 1, and the eventually obtained dilution factor, respectively, can be determined in an accurate way.

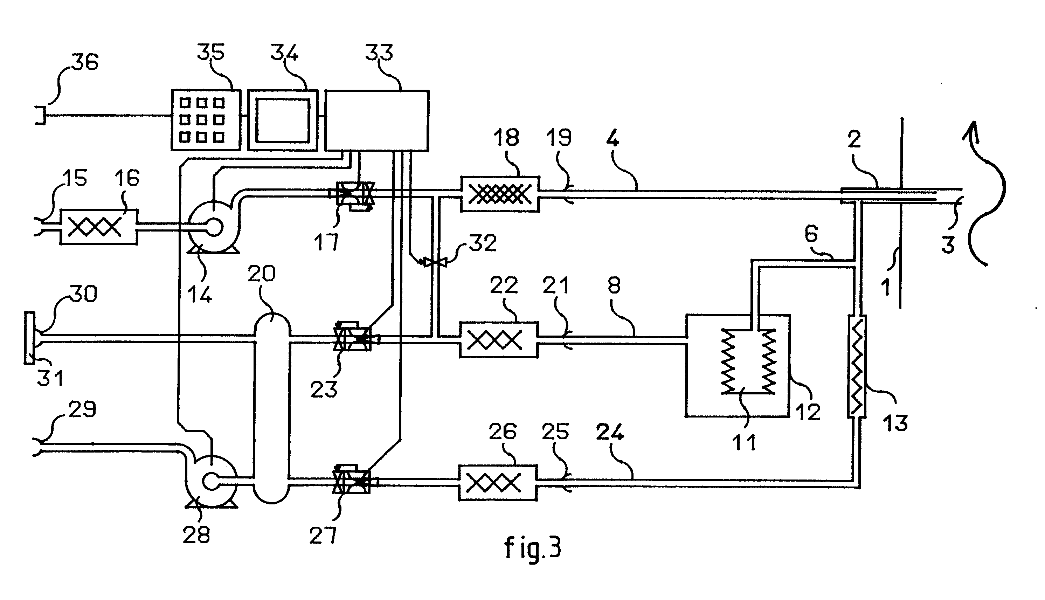

Fig. 3 shows an embodiment of a more complete apparatus for sampling the gas conduit 1 with which several samples can be taken simultaneously and which comprises control means to control the flows to the separate sampling means.

The apparatus includes in the embodiment shown by way of example besides the sampling bag 7 an adsorption tube 13 adapted to adsorb substances from the sample gas for analysis purposes. For this purpose the discharge line 6 is branched such that one branch leads to the sampling bag 7 and the other branch to the adsorption tube 13. The sampling bag 11 and the adsorption tube 13 are hence in parallel connection.

In the embodiment of fig. 3 a pump 14 connects to the supply line 4 for diluting gas, the pump 14 being adapted to suck diluting gas from a connection 15 through a filter 16. Between the pump 14 and the probe 2 are incorporated a mass flow regulator 17, an active carbon filter 18 and a connection 19. With these a clean, controlled flow of diluting gas can therefore flow to the probe 2.

The discharge line 8 from the vessel 12 connects to a container 20, and in the line are incorporated another connection 21, a filter 22 and a mass flow regulator 23.

To the adsorption tube 13 connects a discharge line 24 comprising a connection 25, a filter 26 and a mass flow regulator 27 and thereafter communicating with the container 20. To the container 20 connects a vacuum pump 28 adapted to create a vacuum within the container 20 and to blow-off gas through a connection 29. The container 20 also includes an external vacuum connection 30 which is mostly closed by a small plug 31.

The supply line 4 and the discharge line 8 are connected on a location between the mass flow regulator 17 or 23, respectively, and the probe 2, or the container 12, respectively, by means of a connection line having a valve 32.

The pumps 14 and 28, the mass flow regulators 17, 23 and 27 and the valve 32 are connected with a micro-processor 33 containing a programme in which the steps of the sampling operation and the storage of all measuring values are registered. The computer further communicates with a display 34, a key board 35 and an external connection 36 for communication with any other computer.

The operation of the apparatus according to fig. 3 is as follows.

Diluting gas is sucked by the pump 14 from the connection 15 through the filter 16 and is supplied to the probe 2, wherein the mass flow regulator 17 accurately controls the delivery $V_1$ of diluting gas. The pump 28 creates an underpressure in the container 20, thereby withdrawing sample gas and diluting gas from the probe 2, which flow is distributed to the sampling bag 11 and to the adsorption tube 13. The distribution of flows to the sampling bag 11 and the adsorption tube 13 depends on the adjustment of the mass flow regulators 23 and 27, wherein the sum of the deliveries through the mass flow regulators 23 and 27 is equal to the delivery of the sample gas and the diluting gas withdrawn from the probe 2. The diluting factor, the total quantity of sample gas of the sample taken, the volume of the diluted sample in the bag 11 and the delivery through the adsorption tube 13 can be calculated by the micro processor 33 on the basis of the measurement of the deliveries through the mass flow regulators 17, 23 and 27 and the sampling period. When samples are taken the work of the operator can be limited to a maximum extent by storing adjustments and procedures into algoritms controlling the sampling operation.

The apparatus can be controlled such that prior to the start of the sampling operation the sampling bag 11 is pressed empty. For this purpose the valve 32 is opened, while the mass flow regulator 17 causes a maximum passage of the flow of diluting gas supplied by the pump 14, and the mass flow regulators 23 and 27 are adjusted such that the flow therethrough is zero. At the start of the sampling operation the underpressure does not prevail instantly in the discharge line 6 as a result of the resistances and capacities of the parts of the apparatus through which gas flows. Due thereto the diluting factor is not constant during some period. In order to be able to calculate the total dilution factor in static or batch sampling operations, this is overcome by sucking only diluting gas during the period in which the underpressure is stabilized within the sampling bag 11. This can be obtained when the delivery of the flow through the mass flow regulator 17 is greater than the delivery of the flow through the mass flow regulator 23. The similar procedure is followed at the end of the sampling operation when the sampling bag 11 becomes atmospheric again. As these start and stop flows can be calculated it is also possible to calculate the total dilution factor.

From the above it will be clear that the invention provides an apparatus and method for sampling a gas conduit, wherein condensation and ad- and desorption of the sampling gas is prevented, calibration of the apparatus is redundant and a very accurate reproducible automatically controlled sampling operation is possible.

The invention is not restricted to the embodiment described herein before and shown in the drawing by way of example which can be varied in different manners within the scope of the invention.

**Claims**

1. Method of taking essentially gaseous samples from a gas conduit through which an essentially gaseous flow is conducted, wherein sample gas is withdrawn from the gas conduit into a probe inserted into the gas conduit, while diluting gas is supplied to the sample gas in the probe through a supply line, whereafter the sample gas together with the diluting gas is withdrawn from the probe, the delivery of the diluting gas supplied to the probe being measured and/or controlled in the supply line and the delivery of the sample gas together with the diluting gas withdrawn from the probe being measured and/or controlled in a location within a discharge line and on the basis of these deliveries the delivery of the sample gas being calculated, and the sample gas diluted by the diluting gas is collected for analysis between the probe and the measure and/or control location in the discharge line.

2. Apparatus for taking essentially gaseous samples from a gas conduit through which an essentially gaseous flow is conducted, by using the method according to claim 1, comprising a probe inserted into the gas conduit for withdrawing sample gas from the gas conduit; a supply line connected to the probe and adapted to supply a known diluting gas to the probe; measuring and/or control means in said supply line for measuring and/or controlling the delivery of the diluting gas supplied to the probe; a discharge line connected to the probe and adapted to withdraw the sample gas and the diluting gas from the probe; measuring and/or control means in the discharge line for measuring and/or controlling the delivery of the sampling gas and diluting gas withdrawn from the probe; calculating means connected to the measuring and control means for calculating the delivery of the sample gas withdrawn from the probe on the basis of said deliveries; collecting means for collecting the diluted sample gas for analysis, which collecting means is connected to the discharge line between the probe and the measuring and/or control means.

3. Apparatus according to claim 2 for continuously sampling the gas conduit, wherein the collecting means is a through-flow analysis device for directly analysing the sample;

4. Apparatus according to claim 2 for static or batch sampling, wherein the collecting means is a sampling container, such as an expandable and compressible sample bag, positioned within a vessel communicating with the part of the discharge line incorporating the measuring and control means, a memory of the calculating means including a mathematical model containing the dynamic behaviour of the sampling apparatus.

5. Apparatus according to one of claims 2-4, wherein the discharge line is divided into a plurality of discharge line branches each comprising a collecting means and a measuring and/or control means.

6. Apparatus according to one of claims 2-4, wherein the discharge line comprises a shunt.

7. Apparatus according to claim 5, wherein the measuring and/or control means of one of the discharge line branches is a controlled suction means adjusted such that a delivery can be sucked which is negligible small with respect to the delivery through the other discharge line branch or branches.

8. Apparatus according to one of claims 2-7, wherein the probe is a tubing piece having an open end positioned within the gas conduit.

9. Apparatus according to claim 8, wherein the supply line for the diluting gas extends at least partially axially within the tubing piece in the direction to the open end thereof and opens into the probe at a distance from this open end, but within the circumscription of the gas conduit, the discharge line being connected to the probe near the opposite closed end.

10. Apparatus according to one of claims 2-9, wherein a pump connects to the supply line and to the discharge line, said pump being adapted to supply diluting gas to the probe, or withdraw sample gas and diluting gas from the probe, respectively.

11. Apparatus according to one of claims 2-10, wherein the measuring and/or control means comprises mass flow regulators.

fig.1

fig.2

fig.3

European
Patent Office

EUROPEAN SEARCH
REPORT

Application Number

EP 90 20 3081

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 856 352   (E.D. DAUM et al.)<br>* Column 3, line 17 - cclumn 6, line 57; figures 1,2 *<br>– – – | 1-3,8-10 | G 01<br>N 1/24<br>G 01 N 1/28 |
| A | CHEMICAL ENGINEERING, vol. 74, no. 14, 3rd July 1967, page 120; K. WASHIMI et al.: "Flushing nozzle with hydrogen solves sampling problem"<br>* Page 120 *<br>– – – | 1-3,8-10 | |
| A | PATENT ABSTRACTS OF JAPAN, vol. 9, no. 76 (P-346)[1799], 5th April 1985;<br>& JP-A-59 206 741 (MITSUBISHI JUKOGYO K.K.) 22-11-1984<br>– – – | 1-3,8-10 | |
| A | S.A.E. JOURNAL, vol. 77, no. 12, December 1969, pages 34-36; S.H. MICK et al.: "Use of constant-volume sampler to weigh exhaust emissions poses variety of problems"<br>* Whole document *<br>– – – – – | 1,2,4,5 | |

TECHNICAL FIELDS
SEARCHED (Int. Cl.5)

G 01 N 1/00

The present search report has been drawn up for all claims

| Place of search | Date of completion of search | Examiner |
|---|---|---|
| The Hague | 31 January 91 | SARNEEL A.P.T. |